# EUROPÄISCHE PATENTANMELDUNG

(11) **EP 0 530 477 A1**
(43) Veröffentlichungstag der Anmeldung: **10.03.1993**
(21) Anmeldenummer: 92112242.0
(22) Anmeldetag: 17.07.1992
(51) Int. Cl.: A47J 27/04, A47J 27/16

(54) **Dampf-Gargerät**

(30) Priorität: 26.07.1991 DE 4124896
(71) Anmelder: ELOMA GmbH BEDARFSARTIKEL ZUR GEMEINSCHAFTSVERPFLEGUNG, D-82216 Maisach (DE)
(72) Erfinder: Spann, Gustav, W-8080 Emmering (DE)
(74) Vertreter: Bohnenberger, Johannes, Dr.

(57) **Zusammenfassung**

Es wird ein Dampf-Gargerät mit einem Gehäuse (4) vorgeschlagen, in dessen Innenraum (1) mindestens ein Gebläserad (18) mit Motor (9) und einer Heizung (10) angeordnet sind. Eine Mündung (13) einer Leitung (12) ist innerhalb des Gebläserades (18) angeordnet, wobei im Dämpferbetrieb im wesentlichen kontinuierlich Wasser aus der Mündung (13) strömt und im Gebläse-Luftstrom über die Heizung (10) dem Gehäuseinnenraum (1) als (Naß-) Dampf zugeführt wird. Es wird vorgeschlagen, den Motor (9) mit dem Gebläserad (18) über eine Hohlwelle (11) zu verbinden und die Leitung (12) durch die Hohlwelle (11) zu führen oder deren Bohrung (19) als Leitung auszubilden. Dadurch wird ein besonders kompakter störunanfälliger Aufbau erreicht.

## Beschreibung

Die Erfindung betrifft ein Dampf-Gargerät nach dem Oberbegriff des Patentanspruches 1.

Ein derartiges Dampf-Gargerät ist beispielsweise aus der (nachveröffentlichten) DE 40 13 596 A1 bekannt. Bei diesem Gargerät wird Wasser während des Dämpferbetriebes durch eine Leitung, welche in den Gehäuseinnenraum und am Gebläserand vorbei bis zu dessen Mitte geführt ist, im wesentlichen drucklos dem dort vorliegenden Luftstrom zugeführt, von diesem mitgenommen und radial nach außen durch das Gebläserad gefördert. Dabei zerstäuben insbesondere die Schaufeln das Wasser.

Aus der DE 37 00 894 A1 ist ein Dampf-Gargerät bekannt, bei welchem die Leitung über einer relativ groß ausgebilden Nabe des Gebläserades mündet, so daß frei ausströmendes Wasser auf diese gelangt und von dieser verteilt wird. Auch hier führt die Leitung wieder vor dem Gebläserad vorbei, so daß die Hinterwand des Innenraumes des Gargerätes einen relativ großen Abstand vom Gebläserad aufweisen muß. Darüber hinaus schlägt sich bei längerem Betrieb Kalk auf der Nabe nieder und verschmutzt diese.

Der Erfindung liegt die Aufgabe zugrunde, ein Dampf-Gargerät der eingangs genannten Art dahingehend weiterzubilden, daß eine hinreichende Wasserverteilung auf einfache Weise raumsparend erzielt wird.

Diese Aufgabe wird durch die im Kennzeichen des Patentanspruches 1 angegebenen Merkmale gelöst. Bevorzugte Ausführungsformen der Erfindung ergeben sich aus den Unteransprüchen.

Ein wesentlicher Punkt der Erfindung liegt darin, daß überraschenderweise eine hinreichende Wasserzerstäubung auch dann erzielbar ist, wenn die Mündung der Wasserleitung exakt koaxial zum Gebläselaufrad sitzt, und keinerlei zusätzliche mechanische Mittel zum Verteilen des Wassers vorgesehen sind. Die Führung der Leitung durch die Hohlwelle des Motors, also von hinten in den Garraum, bringt die geforderte Platzersparnis mit sich. Dadurch, daß das Wasser mittig im Laufrad austritt, gibt es keine Verschmutzung der Nabe - soweit eine solche überhaupt vorgesehen ist.

Nachstehend wird die Erfindung anhand von Abbildungen näher erläutert. Hierbei zeigen
- Fig. 1: einen Querschnitt durch eine erste Ausführungsform der Erfindung,
- Fig. 2: einen Schnitt entlang der Linie II-II aus Fig. 1,
- Fig. 3 und 4: Detail-Teilschnitte zur Erläuterung der Wasserleitungsführung.
- Fig. 5: einen Teil-Querschnitt durch eine weitere Ausführungsform der Erfindung.

Bei der nachfolgenden Beschreibung werden gleiche oder gleichwirkende Teile mit den selben Bezugsziffern versehen.

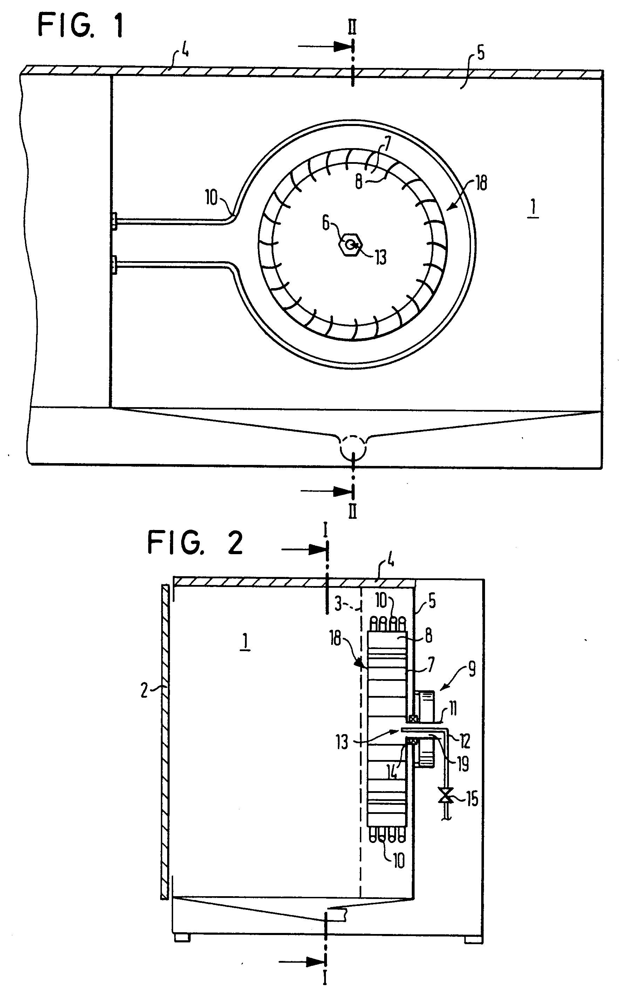

Bei der in den Fig. 1 und 2 gezeigten Ausführungsform der Erfindung umfaßt das Dampf-Gargerät ein Gehäuse 4, das einen Gehäuseinnenraum 1 umschließt und über eine Tür 2 geöffnet werden kann.

An einer Hinterwand 5 des Gehäuses 4 ist ein Gebläse angebracht, welches ein Gebläserad 18 umfaßt, das über eine Hohlwelle 11 mit einem, an der Außenseite der Hinterwand 4 befestigten Elektromotor 9 verbunden ist. Die Hohlwelle 11 ist in der Hinterwand 5 über ein Lager 14 gelagert.

Durch eine Bohrung 19 der Hohlwelle 11 ist eine Leitung 12 geführt, deren Mündung 13 in der Nähe einer Scheibe 7 des Gebläserads 18 liegt, welches Gebläseschaufeln 8 trägt.

Die Leitung 12 ist über ein Ventil 15 mit einer (Trink-) Wasserleitung verbunden und wird von einer (nicht gezeigten) Steuerung derart angesteuert, daß eine definierte Wasserströmung gewährleistet ist.

Rings um das Gebläserad 18 ist eine Heizung 10 angeordnet.

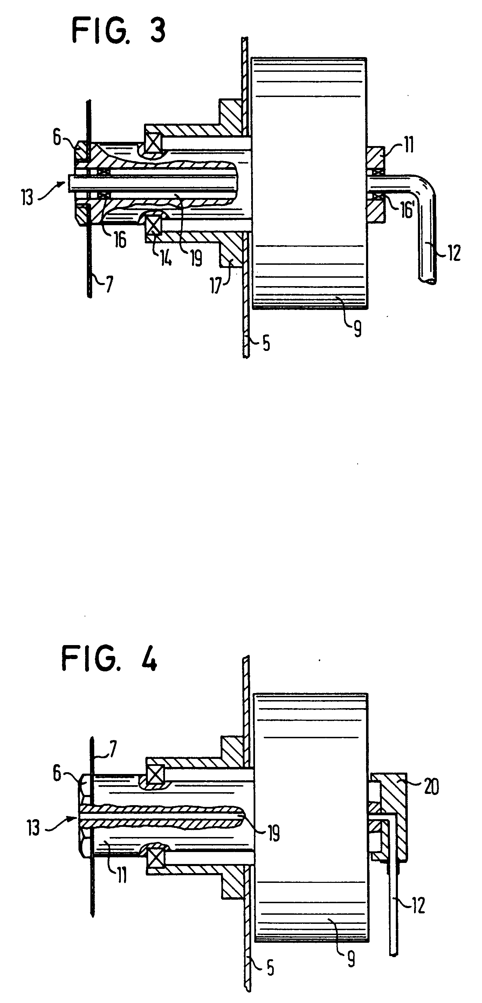

Es sind nun verschiedene Alternativen denkbar, wie man das Wasser führt. Bei einer ersten bevorzugten Ausführungsform, die in Fig. 3 gezeigt ist, führt die Leitung 12 durch die Bohrung 19 der Hohlwelle 11, auf welcher die Scheibe 7 des Laufrads mittels einer Mutter 6 gesichert ist. Die Leitung 12 ist innerhalb der Hohlwelle 11 über Lager 16, 16', welche gleichzeitig eine Abdichtung bewirken, gelagert. Die Mündung 13 kann bei dieser Anordnung je nach Bedarf näher an der Scheibe 7 liegen oder weiter in Richtung Innenraum 1 des Gehäuses ragen, um eine günstigere Wasserverteilung zu erzielen.

Die Hohlwelle 11 ist an der Hinterwand 5 über das Lager 14 gelagert, welches in einem Flansch 17 sitzt, der mit der Hinterwand 5 fest verbunden ist. Vorzugsweise ist hier eine Wellendichtung vorgesehen, wie sie in der DE 36 22 547 C1 gezeigt ist.

Bei einer anderen bevorzugten Ausführungsform der Erfindung, die in Fig. 4 gezeigt ist, wird die Bohrung 19 als Wasserleitung verwendet, so daß die Mündung 13 gleichzeitig das Ende der Hohlwelle 11 darstellt. In diesem Fall ist an der Hinterseite des Motors 9 eine dichte Drehkupplung 20 vorgesehen, über welche die Leitung 12 mit der Bohrung 19 im wesentlichen wasserdicht verbunden ist. Diese Verbindung kann jedoch mit sehr geringem baulichen Aufwand erfolgen, da im Betriebsfall an der Stelle der Mündung 13 ein niedrigerer Druck herrscht als in der Atmosphäre, so daß die Verbindungsstelle zwischen der Leitung 12 und der Bohrung 19 ebenfalls auf einem niedrigen Druck liegt, und somit kein Wasser austreten kann.

Durch die gezeigte Anordnung ist es nun möglich, die Rückwand 3 (siehe Fig. 2) des Gehäuseinnenraums 1, in der sich im allgemeinen ein Fettfilter (nicht gezeigt) befindet, sehr nahe an das Gebläserad 18 heranzurücken, so daß der Innenraum 1 eine maximale Größe einnimmt.

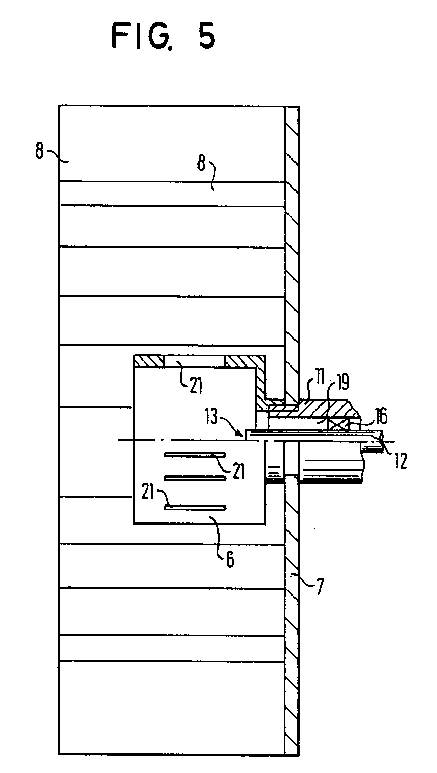

Bei der in Fig. 5 gezeigten Ausführungsform der Erfindung ist die Mutter 6, welche die Scheibe 7 des Gebläserades auf der Hohlwelle 11 hält, topfförmig ausgebildet. Diese topfförmige Mutter hat in ihrem Außenmantel schlitzförmige Öffnungen 21, so daß Wasser, welches durch die Leitung 12 aus der Mündung 13 ausströmt, bei drehendem Rad aus den Schlitzen 21 in feiner Verteilung und zwar gleich verteilt in Umfangsrichtung ausströmt. Man kann auch die schlitzförmigen Öffnungen 21, fortlassen, so daß das Wasser nach vorne (in Fig. 5 nach links) fließt und über den offenen Rand der topfförmigen Mutter 6 ausströmt und als "Kranz" nach außen geschleudert wird. Dieser Austritt von Wasser nach vorne findet auch dann statt, wenn die schlitzförmigen Öffnungen 21 nicht groß genug sind, um die geförderte Wassermenge radial austreten zu lassen. Durch diese Ausbildung der Erfindung wird eine noch gleichmäßigere Wasserverteilung in Umfangsrichtung gewährleistet, so daß das Wasser über die gesamte Tiefe der Schaufeln 8 (in Fig. 5 von links nach rechts) verteilt wird.

### Bezugszeichenliste

- 1: Gehäuseinnenraum
- 2: Tür
- 3: Rückwand
- 4: Gehäuse
- 5: Hinterwand
- 6: Mutter
- 7: Scheibe
- 8: Schaufeln
- 9: Motor
- 10: Heizung
- 11: Hohlwelle
- 12: Leitung
- 13: Mündung
- 14: Lager
- 15: Ventil
- 16: Lager
- 17: Flansch
- 18: Gebläserad
- 19: Bohrung
- 20: Drehkupplung
- 21: Schlitz

## Patentansprüche

1. Dampf-Gargerät mit einem Gehäuse (4) in dessen Innenraum (1) mindestens ein Gebläserad (18) mit Motor (9) und eine Heizung (10) angeordnet sind, wobei eine Mündung (13) einer Leitung (12) innerhalb des Gebläserades (18) angeordnet ist und im Dämpferbetrieb im wesentlichen kontinuierlich Wasser aus der Mündung (13) strömt und im Gebläse-Luftstrom über die Heizung (10) dem Gehäuseinnenraum (1) als (Naß-) Dampf zugeführt wird,
**dadurch gekennzeichnet,**
daß der Motor (9) mit dem Gebläserad (18) über eine Hohlwelle (11) verbunden ist und die Leitung (12) durch die Hohlwelle (11) führt oder von einer Bohrung (19) in der Hohlwelle (11) gebildet ist.

2. Dampf-Gargerät nach Anspruch 1,
dadurch gekennzeichnet,
daß die Mündung (13) im wesentlichen denselben Strömungsquerschnitt aufweist wie die Leitung (12).

3. Dampf-Gargerät nach Anspruch 1, wobei die Leitung (12) durch die Hohlwelle (11) geführt ist,
dadurch gekennzeichnet,
daß die Leitung (12) in der Hohlwelle (11) gelagert (16, 16') ist.

4. Dampf-Gargerät nach einem der vorhergehenden Ansprüche,
dadurch gekennzeichnet,
daß die Mündung (13) in eine koaxial im Gebläserad (18) angeordnete und mit diesem mitdrehende Wasserverteilungseinrichtung (6) mündet.

5. Dampf-Gargerät nach Anspruch 4,
dadurch gekennzeichnet, daß die Wasserverteilungseinrichtung (6) topfförmig ausgebildet ist und an ihrem einen Ende offen ist, und/oder um den Umfang verteilt Öffnungen (21) zum Austritt des Wassers aufweist.
